# EUROPEAN PATENT APPLICATION

(11) **EP 2 631 691 A1**
(43) Date of publication of application: **28.08.2013**
(21) Application number: 11834402.7
(22) Date of filing: 19.10.2011
(51) Int. Cl.: G02B 6/38, G02B 6/44

(54) **OPTICAL FIBER TERMINAL, OPTICAL FIBER CABLE WITH TERMINAL, OPTICAL CONNECTOR, OPTICAL FIBER CABLE WITH CONNECTOR, AND CONNECTION STRUCTURE**

(30) Priority: 19.10.2010 JP 2010234902
(71) Applicant: Furukawa Electric Co., Ltd., Chiyoda-ku Tokyo 100-8322 (JP); Furukawa Automotive Systems Inc., Inukami-gun, Shiga 522-0242 (JP)
(72) Inventor: ENOMOTO, Noritsugu, Inukami-gun Shiga 522-0242 (JP); HIRAIWA, Tetsuya, Inukami-gun Shiga 522-0242 (JP); KONDOU, Toshikuni, Inukami-gun Shiga 522-0242 (JP)
(74) Representative: Schwabe - Sandmair - Marx
(86) International application number: PCT/JP2011/074071
(87) International publication number: WO 2012/053563

(57) **Abstract**

An optical fiber terminal is configured to be attached to an end of an optical fiber cable. The optical fiber cable includes an optical fiber element wire having an optical fiber covered by an element wire coating, a tensile member disposed along a longitudinal direction of the optical fiber element wire, and a coating portion that covers the optical fiber element wire and the tensile member. The optical fiber terminal includes a ferrule and a tensile member fixing member for fixing the tensile member to the ferrule. The ferrule has an insertion hole for inserting and fixing the optical fiber element wire, and a front end face on which a front end face of the optical fiber inserted in the insertion hole is configured to be exposed. There is thus provided an optical fiber terminal which can achieve an optical connector that is strong against vibration and impact, an optical fiber cable with the terminal, the optical connector, an optical fiber cable with the connector, and a connection structure.

## Description

### Field

The present invention relates to an optical fiber terminal, an optical fiber cable with a terminal, an optical connector, an optical fiber cable with a connector, and a connection structure.

### Background

Along with an increase in the amount of communication of information in a vehicle, such as control signals, image signals, and audio signals, in recent years, transmission paths used for transmission of the information signals have begun using optical fiber cables instead of conventional metal cables (refer to Patent Literatures 1 and 2). Unlike the metal cable, the optical fiber cable is free from a problem of emitting noise therearound due to increase in the communication speed, and thus is a signal transmission path suitable for high-speed and large-capacity information communication.

The optical fiber cable is provided at an end thereof with an optical connector. The optical connector includes a terminal (optical fiber terminal) including a ferrule and the like to be attached to the end of the optical fiber cable, and a housing having a structure for being connected to another optical connector or the like. On the other hand, an optical connector is also provided on a device performing communication, and the optical fiber cable can be connected with the device performing communication by connecting the optical connectors to each other. The optical connectors also achieve a connection between optical fiber cables. The connection between optical fiber cables is called wire-to-wire connection.

### Citation List

### Patent Literatures

Patent Literature 1: Japanese Patent Application Laid-open No. 2002-107573
Patent Literature 2: Japanese Patent No. 3813496 Summary

### Technical Problem

When optical fiber cables are applied to wire harnesses in a vehicle, a device performing communication through the wire harnesses is disposed at each component unit of the vehicle, such as a roof portion, a floor portion, an engine and surroundings thereof, and an instrument panel and surroundings thereof. Therefore, among components in the wire harnesses connecting between the communication devices disposed at the respective component units, particularly the optical connector used for the wire-to-wire connection can be repeatedly mounted and dismounted many times, for example, in the assembly process and the mounting process during the vehicle production, and in the inspection and maintenance, and thus can be subjected to strong impacts such as tensions at those occasions. The optical connector is also subjected to vibration, impacts, and the like while the vehicle is running. Accordingly, particularly the optical connectors used in a vehicle are particularly required to be strong against vibration and impact.

The present invention has been made in view of the description above, and it is an object of the present invention to provide an optical fiber terminal which can achieve an optical connector that is strong against vibration and impact, an optical fiber cable with the terminal, the optical connector, an optical fiber cable with the connector, and a connection structure.

### Solution to Problem

In order to solve the problems and to attain the object, an optical fiber terminal according to the present invention is configured to be attached to an end of an optical fiber cable. The optical fiber cable includes: an optical fiber element wire having an optical fiber covered by an element wire coating; a tensile member disposed along a longitudinal direction of the optical fiber element wire; and a coating portion that covers the optical fiber element wire and the tensile member. The optical fiber terminal includes: a ferrule that has an insertion hole for inserting and fixing the optical fiber element wire, and a front end face on which a front end face of the optical fiber inserted in the insertion hole is configured to be exposed; and a tensile member fixing member for fixing the tensile member to the ferrule.

In the above invention, according to the optical fiber terminal of the present invention, the tensile member is made of resin fibers; the ferrule includes a base portion for placing thereon the tensile member at an opposite end to the front end face of the ferrule; and the tensile member fixing member is a clinching member configured to be fitted into the base portion of the ferrule to clinch the base portion of the ferrule together with the tensile member placed on the base portion.

In the above invention, according to the optical fiber terminal of the present invention, the ferrule includes an optical fiber fixing member having a groove for holding the optical fiber element wire, and an open hole formed on a side face of the ferrule, the open hole having a depth at which the inserted optical fiber element wire is at least exposed. The optical fiber fixing member is configured to be inserted into the open hole of the ferrule, and the inserted optical fiber element wire is configured to be held by the groove to fix the inserted optical fiber element wire.

An optical fiber cable with a terminal according to the present invention includes: an optical fiber cable including an optical fiber element wire having an optical fiber covered by an element wire coating, a tensile member disposed along a longitudinal direction of the optical fiber element wire, and a coating portion that covers the optical fiber element wire and the tensile member; and the optical fiber terminal according to any one of the above inventions that is attached to an end of the optical fiber cable.

An optical connector according to the present invention includes: the optical fiber terminal according to any one of the above inventions; and a housing that holds the optical fiber terminal. The housing includes a fixing structure for fixing the optical connector to another optical connector in a removable manner.

In the above invention, according to the optical connector of the present invention, the fixing structure is a latch structure for engaging the optical connector with another optical connector.

In the above invention, the optical connector of the present invention further includes an optical fiber terminal fixing member for fixing the optical fiber terminal to the housing. The ferrule includes a groove on an outer circumference of the ferrule, and the optical fiber terminal fixing member is configured to be fitted into the groove.

In the above invention, according to the optical connector of the present invention, the housing includes a restricting surface for restricting the optical fiber terminal from moving toward the front end face of the ferrule.

In the above invention, according to the optical connector of the present invention, the ferrule includes a flange portion that abuts against the restricting surface of the housing to restrict the optical fiber terminal from moving toward the front end face of the ferrule.

An optical fiber cable with a connector according to the present invention includes: an optical fiber cable including an optical fiber element wire having an optical fiber covered by an element wire coating, a tensile member disposed along a longitudinal direction of the optical fiber element wire, and a coating portion that covers the optical fiber element wire and the tensile member; and the optical connector according to any one of the above inventions that is attached to an end of the optical fiber cable.

A connection structure of an optical connector according to the present invention includes at least two ferrules, into each of which an optical fiber is incorporated, the ferrules being arranged in a longitudinal direction in a manner opposed to each other. The connection structure restricts the ferrules from moving in directions coming close to each other and maintains a shortest distance between connection end faces of the at least two ferrules at 30 µm to 300 µm.

### Advantageous Effects of Invention

According to the present invention, because a tensile member is directly fixed to a ferrule so as to be integrated therewith, an optical connector that is strong against vibration and impact can be achieved.

### Brief Description of Drawings

FIG. 1 is a view schematically illustrating an optical fiber cable with terminals in which optical fiber terminals according to a first embodiment are attached to an end of the optical fiber cable.
FIG. 2 is a schematic exploded view of the optical fiber cable with terminals illustrated in FIG. 1.
FIG. 3 is a view schematically illustrating a structure of an optical fiber element wire.
FIG. 4 is a cross-sectional view for explaining a state of inserting an optical fiber fixing member into a ferrule.
FIG. 5 is a partial cross-sectional view for explaining a state in which a tensile member is fixed.
FIG. 6 is a view schematically illustrating a state in which optical connectors according to a second embodiment and a third embodiment are used.
FIG. 7A is a front view schematically illustrating an optical fiber cable with connectors in which the optical connector according to the second embodiment is attached to an end of the optical fiber cable.
FIG. 7B is a side view schematically illustrating the optical fiber cable with connectors in which the optical connector according to the second embodiment is attached to the end of the optical fiber cable.
FIG. 7C is a plan view schematically illustrating the optical fiber cable with connectors in which the optical connector according to the second embodiment is attached to the end of the optical fiber cable.
FIG. 8 is a partial cross-sectional view of the optical connector illustrated in FIGS. 7A to 7C.
FIG. 9A is a front view schematically illustrating a structure of an optical fiber terminal fixing member illustrated in FIGS. 7A to 7C.
FIG. 9B is a side view schematically illustrating the structure of the optical fiber terminal fixing member illustrated in FIGS. 7A to 7C.
FIG. 9C is a view illustrating a cross section taken along line A-A in FIG. 9A and a state in which the optical fiber terminal fixing member fixes the optical fiber terminal.
FIG. 10A is a front view schematically illustrating an optical fiber cable with connectors in which the optical connector according to the third embodiment is attached to an end of the optical fiber cable.
FIG. 10B is a side view schematically illustrating the optical fiber cable with connectors in which the optical connector according to the third embodiment is attached to the end of the optical fiber cable.
FIG. 10C is a plan view schematically illustrating the optical fiber cable with connectors in which the optical connector according to the third embodiment is attached to the end of the optical fiber cable.
FIG. 11 is a partial cross-sectional view of the optical connector illustrated in FIGS. 10A to 10C.
FIG. 12 is a partial cross-sectional view illustrating a state in which the optical connector illustrated in FIGS. 7A to 7C is connected with the optical connector illustrated in FIGS. 10A to 10C.

### Description of Embodiments

A description will be made below in detail of embodiments of an optical fiber terminal, an optical fiber cable with terminals, optical connectors, an optical fiber cable with connectors, and a connection structure according to the present invention with reference to the accompanying drawings. Note that the present invention is not limited by the embodiments.

### (First Embodiment)

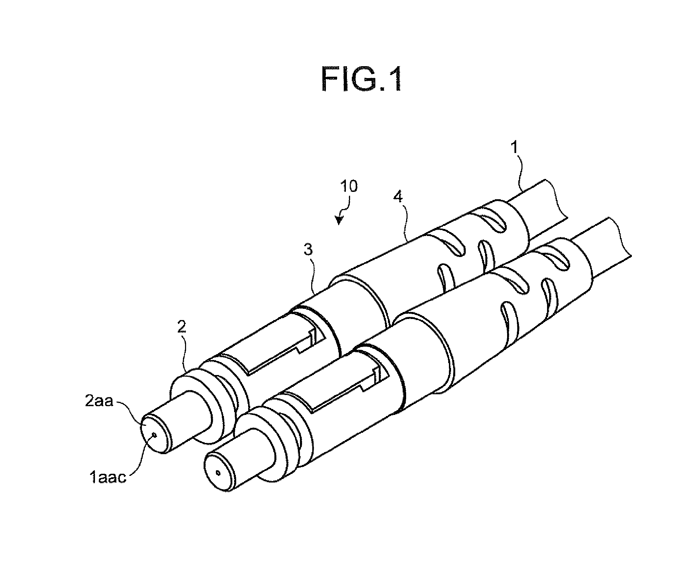

First, an optical fiber terminal according to a first embodiment of the present invention will be described. FIG. 1 is a view schematically illustrating an optical fiber cable with terminals in which the optical fiber terminals according to the first embodiment are attached to an end of the optical fiber cable. As illustrated in FIG. 1, optical fiber terminals 10 are attached to respective pieces of the end of an optical fiber cable 1 to be attached to a duplex optical connector, and provided each with a ferrule 2, a clinching ring 3 serving as a fixing member for a tensile member, and a protection boot 4. The ferrule 2 includes an optical fiber fixing member 2e. The two optical fiber terminals 10 have the same structure as each other, and therefore, one of the optical fiber terminals 10 will be described below.

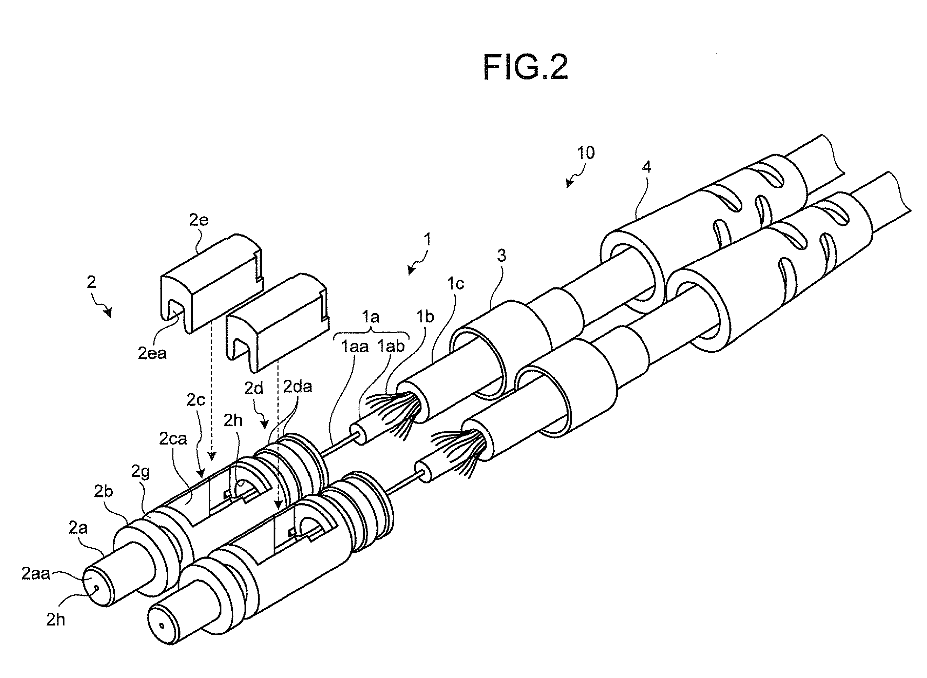

FIG. 2 is a schematic exploded view of the optical fiber cable with terminals illustrated in FIG. 1. As illustrated in FIG. 2, the optical fiber cable 1 includes an optical fiber element wire 1a composed of an optical fiber 1aa and an element wire coating portion 1ab that is formed along the longitudinal direction of the outer circumference of the optical fiber 1aa to clad the optical fiber 1aa. The optical fiber cable 1 also includes a tensile member 1b disposed along the longitudinal direction of the outer circumference of the optical fiber element wire 1a, and further includes an outer coating portion 1c covering the outer circumference of the tensile member 1b along the longitudinal direction. The tensile member 1b is made of aramid resin fibers such as Kevlar (registered trademark), and are disposed so as to surround the outer circumference of the optical fiber element wire 1a. The element wire coating portion 1ab is made of, for example, polyamide resin. The element wire coating portion 1ab and the outer coating portion 1c are partially removed at the end of the optical fiber cable 1, and thus, the optical fiber 1aa, the element wire coating portion 1ab, and the tensile member 1b are externally exposed by respective predetermined lengths.

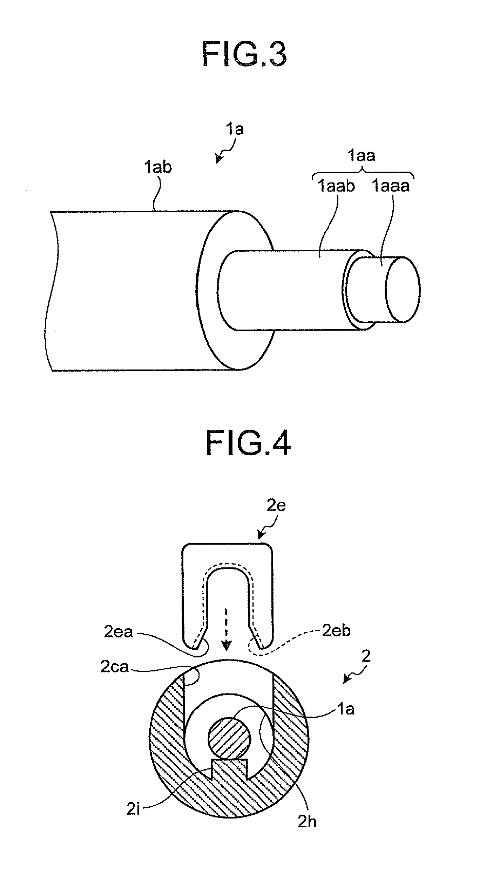

FIG. 3 is a view schematically illustrating a structure of the optical fiber element wire 1a. As illustrated in FIG. 3, the optical fiber 1aa is a so-called hard clad silica (HCS) optical fiber that is composed of a core portion 1aaa made of silica based glass and a cladding portion 1aab made of hard plastic having a lower refractive index than that of the core portion 1aaa and formed on the outer circumference of the core portion 1aaa. The core portion 1aaa has a core diameter of, for example, 200 µm, and the cladding portion 1aab has a clad diameter of, for example, 230 µm. The optical fiber 1aa is designed so as to transmit an optical signal of 850 nm at a low loss and over a wide bandwidth, to have a low bending loss, and to be strong against cyclic bending and pulling operations.

Referring back to FIG. 2, the ferrule 2 has a cylindrical shape on the whole, and includes a front end portion 2a, a flange portion 2b provided along the outer circumference, a main body 2c, a base portion 2d, and the optical fiber fixing member 2e. The ferrule 2 is made of, for example, polyphenylene sulfide (PPS) resin excelling in thermal resistance, mechanical strength, and moldability. The front end portion 2a has a front end face 2aa. The base portion 2d is located at an end on the opposite side of the front end face 2aa, and provided along the outer circumference thereof with projecting portions 2da, thus having a corrugated surface. A groove portion 2g is formed along the outer circumference between the main body 2c and the flange portion 2b. The ferrule 2 is also formed with an insertion hole 2h for inserting the end of the optical fiber cable 1 therein so that the insertion hole penetrates from the front end face 2aa to the base portion 2d. The diameter of the insertion hole 2h is set to substantially equal to or slightly larger than the outside diameter of the optical fiber 1aa at the front end portion 2a, and set to substantially equal to or slightly larger than the outside diameter of the optical fiber element wire 1a at other portions (except at an open hole 2ca to be described later).

The optical fiber fixing member 2e has a gutter-like shape, and includes a groove 2ea for holding the optical fiber element wire 1a. The main body 2c of the ferrule 2 is formed on a side face thereof with the open hole 2ca for inserting the optical fiber fixing member 2e therein. The open hole 2ca has a shape that allows inner walls of the open hole 2ca to come contact with outer walls of the optical fiber fixing member 2e substantially without a space therebetween when the optical fiber fixing member 2e is inserted. In addition, the open hole 2ca is communicated with the insertion hole 2h, and is formed to a depth allowing a portion of the element wire coating portion 1ab of the optical fiber cable 1 inserted in the ferrule 2 to be exposed. A structure of the open hole 2ca of the ferrule 2 will be described later in detail.

A description will be made next of a method for attaching the optical fiber terminal 10 to the end of the optical fiber cable 1. First, the optical fiber cable 1 is sequentially inserted through the protection boot 4 and the clinching ring 3. Next, the outer coating portion 1c and the element wire coating portion 1ab at the end of the optical fiber cable 1 are partially removed to externally expose the optical fiber 1aa, the element wire coating portion 1ab, and the tensile member 1b by the respective predetermined lengths.

Then, the end of the optical fiber cable 1 is inserted from the side of the base portion 2d into the insertion hole 2h of the ferrule 2. At this time, the optical fiber cable 1 is inserted so that a front end face 1aac (refer to FIG. 1) of the optical fiber 1aa inserted in the insertion hole 2h is exposed to and is almost coplanar with the front end face 2aa of the ferrule 2. Then, the element wire coating portion 1ab of the optical fiber element wire 1a results to be located in the position of the open hole 2ca.

Next, the optical fiber fixing member 2e is inserted into the open hole 2ca so as to hold the optical fiber element wire 1a and thus to fix the optical fiber element wire 1a to the ferrule 2. FIG. 4 is a cross-sectional view in a plane perpendicular to the longitudinal direction of the ferrule 2 for explaining the state of inserting the optical fiber fixing member 2e into the ferrule 2. As illustrated in FIG. 4, a support base 2i is provided on a bottom surface of the open hole 2ca of the ferrule 2 along the insertion direction of the optical fiber element wire 1a, and the optical fiber element wire 1a, when inserted, is supported by the support base 2i. The top of the support base 2i may be a plane surface, or a V-shaped or U-shaped groove for positioning the fiber element wire 1a.

The optical fiber fixing member 2e is inserted into the open hole 2ca, and thus, the optical fiber element wire 1a is held by the groove 2ea. The groove 2ea is formed inside thereof with a corrugated portion 2eb. Therefore, when the optical fiber fixing member 2e holds the optical fiber element wire 1a with the groove 2ea, the frictional force increases between the groove 2ea and the optical fiber element wire 1a. In addition, the optical fiber fixing member 2e, when inserted in the open hole 2ca, is pressed to be in contact with the ferrule 2 because the inner walls of the open hole 2ca are in contact with the outer walls of the optical fiber fixing member 2e substantially without a space therebetween, as described above. The optical fiber fixing member 2e fixes the optical fiber element wire 1a to the ferrule 2 with the frictional force and the pressure described above. As illustrated in FIG. 2, a recess of the fixing member 2e and a projection provided in the open hole 2ca are fitted with each other, and thus, the fixing member 2e is prevented from coming off from the open hole 2ca. By fixing the optical fiber element wire 1a to the ferrule 2 using the optical fiber fixing member 2e such as described above, the attaching operation can be continued, for example, without waiting for adhesive to be solidified in the case of fixing the optical fiber element wire 1a with the adhesive. Thus, the time for the working process can be shortened. The fixing member 2e can be removed, and therefore, the relative positional relation between the ferrule 2 and the optical fiber element wire 1a can be easily adjusted. By setting the inside diameter ϕ2h of the insertion hole 2h to be 1.2 to 1.5 times as large as the outside diameter ϕ1a of the optical fiber element wire 1a, the optical fiber element wire 1a allowed to deflect in the fixing portion 2d (5 mm to 1.5 mm), and thus, in many cases, the optical fiber 1aa can be prevented from suffering damage by being pushed.

Next, the tensile member 1b is placed on the base portion 2d of the ferrule 2. At this time, it is preferable to place the tensile member 1b uniformly over the outer circumference of the base portion 2d. Then, the clinching ring 3 is fitted onto the base portion 2d, and the base portion 2d is clinched by the clinching ring 3 together with the tensile member 1b placed on the base portion 2d. Thereafter, the protection boot 4 is mounted on the clinching ring 3. Thus, the optical fiber terminals 10 are attached to the optical fiber cable 1 to produce the optical fiber cable with terminals. The protection boot 4 is made of, for example, rubber or elastic plastic, and prevents a joint portion between the optical fiber terminal 10 and the optical fiber cable 1 from bending to a smaller bending radius than an allowable radius, thereby preventing the optical fiber element wire 1a from breaking.

Here, in the optical fiber terminal 10, the clinching ring 3 fixes the tensile member 1b to the ferrule 2, and thus, the tensile member 1b is fixed to the ferrule 2 to be integrated therewith. Therefore, a strong structure against vibration and impact is obtained.

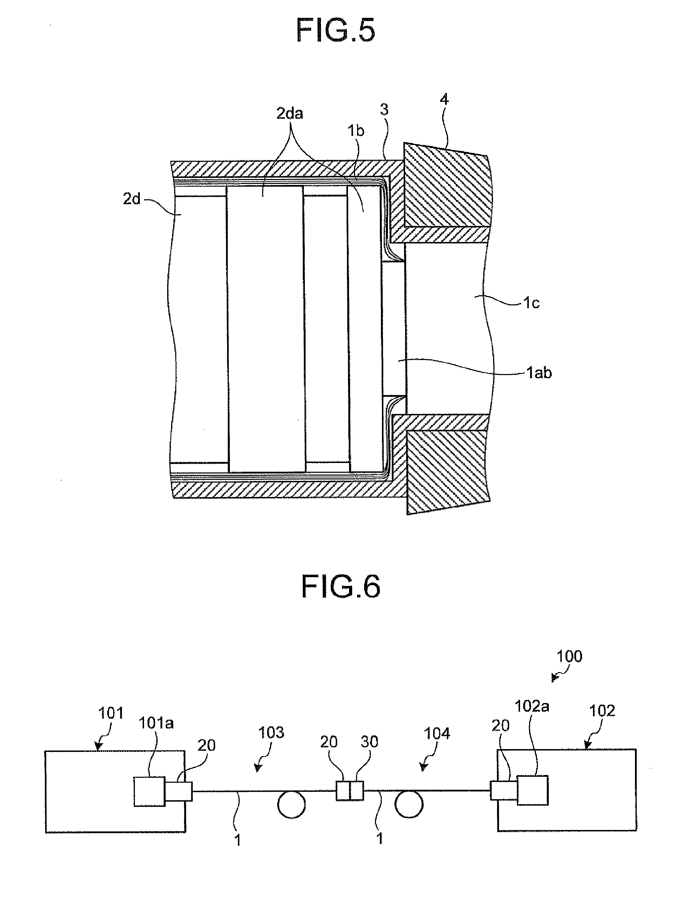

FIG. 5 is a partial cross-sectional view for explaining the state in which the tensile member 1b is fixed. As illustrated in FIG. 5, the tensile member 1b is directly fixed to the base portion 2d of the ferrule 2 by the clinching ring 3. For this reason, the optical fiber cable 1 and the optical fiber terminal 10 are integrated with each other at the joint portion therebetween, and thus are prevented from easily separating from each other even when the optical fiber cable 1 is pulled due to vibration or impact. Therefore, the optical fiber terminal 10 is strengthened against vibration and impact. The base portion 2d includes the projecting portions 2da along the outer circumference, and thus, the surface of the base portion 2d includes projections and recesses. Consequently, after being clinched by the clinching ring 3, the tensile member 1b, when pulled, is caught on the projecting portions 2da to be prevented from being easily pulled out, and thus is further strengthened against tension. A convex portion that is engaged with the groove of the base portion 2d may be provided on the inner circumference of the clinching ring 3.

In addition, in the optical fiber terminal 10, the optical fiber element wire 1a is fixed to the ferrule 2 using the optical fiber fixing member 2e. Accordingly, the optical fiber terminal 10 is further firmly connected with the optical fiber cable 1, and thus is further strengthened against vibration and impact. Moreover, this structure makes an external force applied to the optical fiber cable 1 act on the fixing portion, and thus, the end face side is hardly affected. For this purpose, the fixing portion is advantageous to have a length of 3 mm to 1.6 mm.

As has been described above, the optical fiber terminal 10 according to the first embodiment hardly separates from the optical fiber cable 1 even when the optical fiber cable 1 is pulled due to vibration or impact. Thus, the optical fiber terminal 10 is strong against vibration and impact, and can endure a tensile force of, for example, as large as 100 N.

### (Second and Third Embodiments)

Next, a second embodiment and a third embodiment will be described. Optical connectors according to the second and the third embodiments each includes the optical fiber terminal according to the first embodiment.

FIG. 6 is a view schematically illustrating a state in which the optical connectors according to the second and the third embodiments are used. FIG. 6 illustrates an in-vehicle communication system 100. In this in-vehicle communication system 100, a control board 101 and a control board 102 provided in devices performing communication are connected to each other through optical fiber cables 103 and 104 with connectors, and perform mutual transmission of control signals.

The control boards 101 and 102 are respectively equipped with fiber optical transceivers (FOTs) 101a and 102a, each of which includes a female connector structure. The optical fiber cable 103 with connectors is a cable in which male optical connectors 20 according to the second embodiment are attached to both ends of the optical fiber cable 1 illustrated in FIG. 2. The optical fiber cable 104 with connectors is a cable in which the optical connector 20 and a female optical connector 30 according to the third embodiment are attached to the respective ends of the optical fiber cable 1. The optical connectors 20 of the optical fiber cables 103 and 104 with connectors are connected to the FOTs 101a and 102a, respectively, while the other optical connector 20 of the optical fiber cable 103 with connectors is connected (that is, connected wire-to-wire) to the optical connector 30 of the optical fiber cable 104 with connectors. Accordingly, a signal transmission path is formed by the optical fiber cables 103 and 104 with connectors between the control boards 101 and 102, and thus, high-speed and large-capacity communication is enabled.

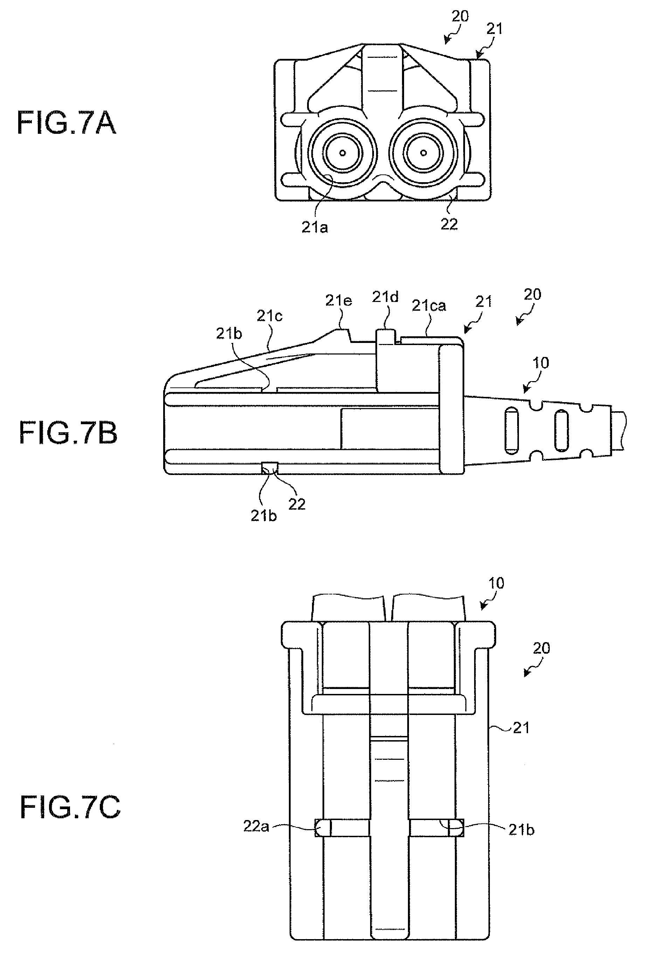

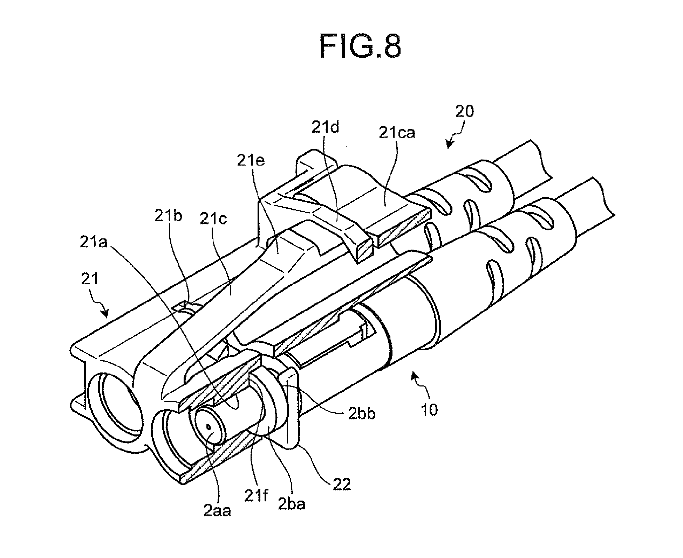

Next, the optical connector according to the second embodiment will be specifically described. FIGS. 7A, 7B, and 7C are front, side, and plan views, respectively, schematically illustrating the optical fiber cable with connectors in which the optical connector according to the second embodiment is attached to the end of the optical fiber cable. FIG. 8 is a partial cross-sectional view of the optical connector illustrated in FIGS. 7A to 7C.

As illustrated in FIGS. 7A to 7c and 8, the optical connector 20 includes the optical fiber terminals 10 according to the first embodiment, a housing 21 for holding the optical fiber terminals 10, and an optical fiber terminal fixing member 22 for fixing the optical fiber terminals 10 to the housing 21.

The housing 21 includes two insertion holes 21a formed in parallel with each other in the longitudinal direction for inserting therein the two optical fiber terminals 10 attached to the respective ends of the duplex optical fiber cable 1; a slit 21b formed so as to penetrate from a top surface to a bottom surface of the housing 21 and so as to communicate with the insertion holes 21a in order to insert therein the optical fiber terminal fixing member 22; an elastic arm portion 21c formed so as to slant obliquely upward from the front end to the rear end in the longitudinal direction in the substantially middle in the width direction; a hook portion 21d for hooking and stopping a front end portion 21ca of the arm portion 21c; and a latch projection 21e formed on an upper portion of the arm portion 21c. An inner wall of the insertion hole 21a is provided with a restricting surface 21f that abuts against a front end face 2ba of the flange portion 2b of the optical fiber terminal 10 to restrict the optical fiber terminal 10 from moving toward the side of the front end face thereof. The housing 21 is made of, for example, PPS or polybutylene terephthalate (PBT). Considering the use in a car, a resin that is thermally resistant and has low thermal expansion rate is suitable.

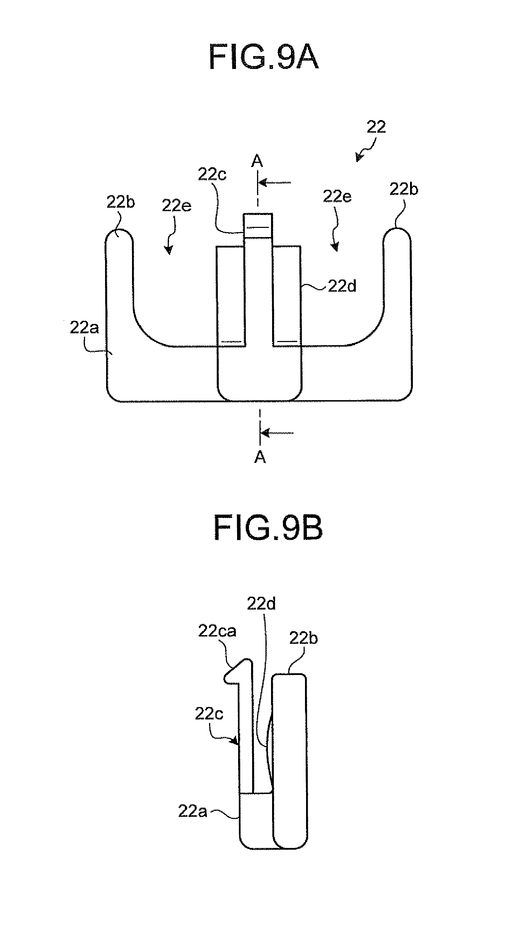

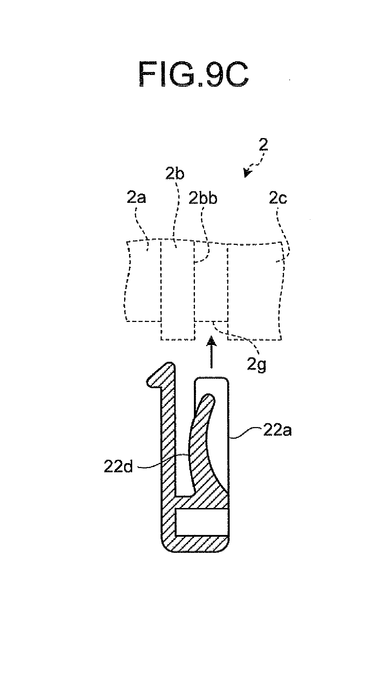

FIGS. 9A and 9B are front and side views, respectively, schematically illustrating a structure of the optical fiber terminal fixing member illustrated in FIGS. 7A to 7C. FIG. 9C is a view illustrating a cross section taken along line A-A in FIG. 9A and a state in which the optical fiber terminal fixing member fixes the optical fiber terminal. As illustrated in FIGS. 9A to 9C, the optical fiber terminal fixing member 22 includes a main body 22a, fitting portions 22b formed so as to project from both ends in the width direction of the main body 22a, a latch portion 22c formed so as to project from the substantially middle in the width direction of the main body 22a, and a spring portion 22d. Two gaps 22e are formed between the fitting portions 22b and both the latch portion 22c and the spring portion 22d. The optical fiber terminal fixing member 22 is made of, for example, PPS or PBT.

The thickness of the fitting portions 22b is set to substantially equal to or slightly smaller than the width of the groove portion 2g of the ferrule 2. The latch portion 22c is provided slightly on the front side of the fitting portions 22b, and provided at a front end thereof with a latching pawl 22ca. As illustrated in FIGS. 9B and 9C, when viewed from the side, the spring portion 22d is curved in a circular arc shape so as to project toward the latch portion 22c, and formed so that the arc-shaped portion projects higher than the surface of the fitting portion 22b on the side of the latch portion 22c.

Next, a method for assembling the optical connector 20 will be described. First, as illustrated in FIG. 8, the two optical fiber terminals 10 are inserted into the insertion holes 21a of the housing 21 so that the front end faces 2ba of the flange portions 2b of the ferrules 2 abut against the restricting surfaces 21f in the insertion holes 21a. At this time, the groove portions 2g of the ferrules 2 are located so as to overlap with the slit 21b formed in the housing 21.

Then, the optical fiber terminal fixing member 22 is inserted from the bottom side of the housing 21 into the slit 21b. As a result, as illustrated in FIG. 9C, the two fitting portions 22b of the optical fiber terminal fixing member 22 are inserted into the two respective outside groove portions 2g of the two ferrules 2. The front ends of the fitting portions 22b reach the slit 21b in the top surface and are inserted therein. Accordingly, the optical fiber terminal fixing member 22 is restricted from moving in the longitudinal direction by the slit 21b in the top and bottom surfaces.

The spring portion 22d is inserted into each of the two groove portions 2g of the ferrules 2 in the state in which the curved portion is pressed backward by the flange portion 2b. As a result, the spring portion 22d presses a rear end face 2bb of the flange portion 2b, and thus, the front end face 2ba of the flange portion 2b is pressed by the restricting surface 21f of the housing 21 toward the front end face 2aa of the ferrule 2. Accordingly, the ferrule 2 is pressed and stopped by the restricting surface 21f of the housing 21. The latch portion 22c passes between the two ferrules 2, and the latching pawl 22ca is engaged into the slit 21b in the top surface of the housing 21. Accordingly, the optical fiber terminal fixing member 22 is fixed to the housing 21. The two ferrules 2 are disposed in the two gaps 22e.

As described above, the fitting portions 22b of the optical fiber terminal fixing member 22 fit in the groove portions 2g of the ferrules 2, and the optical fiber terminal fixing member 22 also fits in the slit 21b. Accordingly, the optical fiber terminals 10 are firmly fixed to the housing 21, and thus, the optical connector 20 is further strengthened against vibration and impact. Therefore, the optical connector 20 can endure a tensile force of, for example, as large as 100 N, and has high connection reliability. In addition, in the second embodiment, the optical fiber terminal fixing member 22 uses the spring portion 22d to press the optical fiber terminal 10 to be stopped against the restricting surface 21f of the housing 21, and thus, the optical fiber terminal 10 is further restricted from moving toward the front end face thereof. Accordingly, the front end face 2aa of the optical fiber terminal 10 can be set in a desired position.

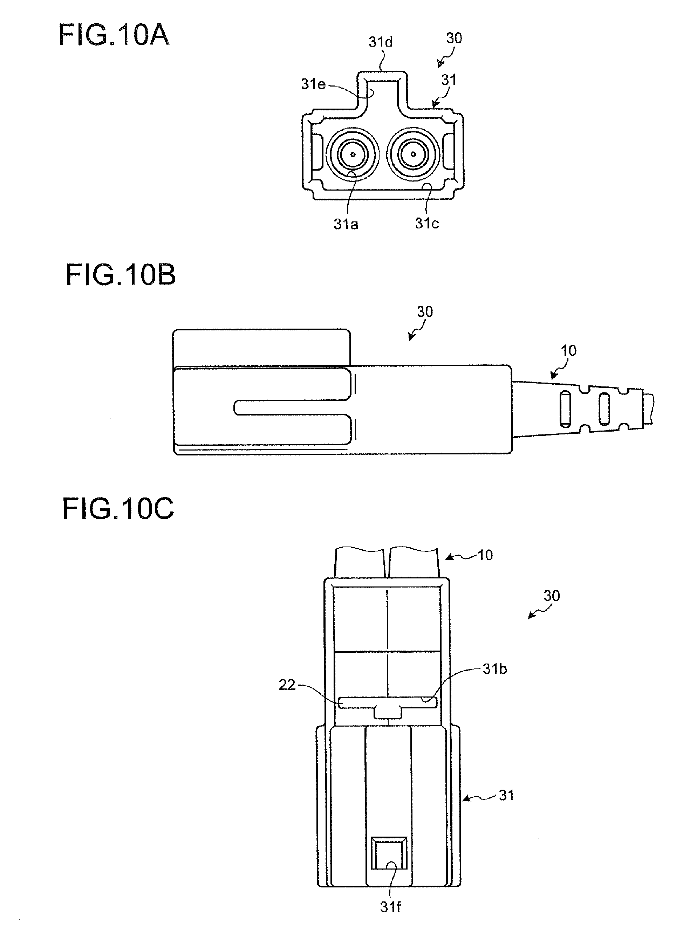

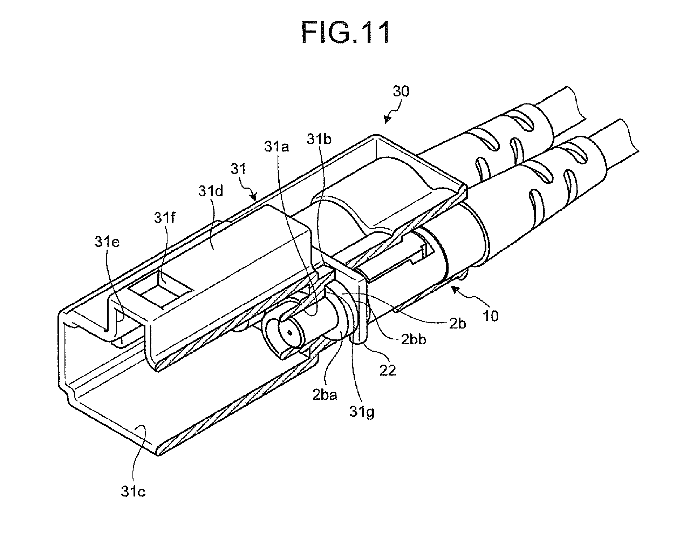

Next, the optical connector according to the third embodiment will be specifically described. FIGS. 10A, 10B, and 10C are front, side, and plan views, respectively, schematically illustrating the optical fiber cable with connectors in which the optical connector according to the third embodiment is attached to the end of the optical fiber cable. FIG. 11 is a partial cross-sectional view of the optical connector illustrated in FIGS. 10A to 10C.

As illustrated in FIGS. 10A to 10C and 11, the optical connector 30 includes the optical fiber terminals 10 according to the first embodiment, a housing 31 for holding the optical fiber terminals 10, and the optical fiber terminal fixing member 22 similar to those in FIGS. 9A to 9C for fixing the optical fiber terminals 10 to the housing 31.

The housing 31 includes two insertion holes 31a formed in parallel with each other in the longitudinal direction for inserting therein the two optical fiber terminals 10 attached to the respective ends of the duplex optical fiber cable 1; a slit 31b formed so as to penetrate from a bottom surface to a top surface of the housing 31 and so as to communicate with the insertion holes 31a in order to insert therein the optical fiber terminal fixing member 22; and a receptacle 31c that communicates toward the front end thereof from the insertion holes 31a to house the optical connector 20 according to the second embodiment inserted therein. The top surface of the housing 31 is formed with a projection 31d. The projection 31d is formed inside thereof with a guide groove 31e, in a continuous manner with the receptacle 31c, through which the arm portion 21c is guided when the optical connector 20 is inserted. The projection 31d is formed with a latch hole 31f serving as a fixing structure for receiving the latch projection 21e fitted therein. An inner wall of the insertion hole 31a is provided with a restricting surface 31g that abuts against the front end face 2ba of the flange portion 2b of the optical fiber terminal 10 to restrict the optical fiber terminal 10 from moving forward. The housing 31 is made of, for example, PPS or PBT.

Next, a method for assembling the optical connector 30 will be described. First, as illustrated in FIG. 11, the two optical fiber terminals 10 are inserted into the insertion holes 31a of the housing 31 so that the front end faces 2ba of the flange portions 2b of the ferrules 2 abut against the restricting surfaces 31g in the insertion holes 31a. At this time, the groove portions 2g of the ferrules 2 are located so as to overlap with the slit 31b formed in the housing 31.

Then, the optical fiber terminal fixing member 22 is inserted from the top of the housing 31 into the slit 31b. As a result, in the same manner as in the case of the optical connector 20, the two fitting portions 22b of the optical fiber terminal fixing member 22 are inserted into the two respective outside groove portions 2g of the two ferrules 2. The front ends of the fitting portions 22b reach the slit 21b on the bottom surface side and are inserted therein. Accordingly, the optical fiber terminal fixing member 22 is restricted from moving in the longitudinal direction by the slit 31b in the top and bottom surfaces.

The spring portion 22d is inserted into each of the two groove portions 2g of the ferrules 2 in the state in which the curved portion is pressed backward by the flange portion 2b. As a result, the spring portion 22d presses the rear end face 2bb of the flange portion 2b, and thus, the front end face 2ba of the flange portion 2b is pressed by the restricting surface 31g of the housing 31 toward the front end face 2aa of the ferrule 2. Accordingly, the ferrule 2 is pressed and stopped by the restricting surface 31g of the housing 31. The latch portion 22c passes between the two ferrules 2, and the latching pawl 22ca is engaged into the slit 31b in the bottom surface of the housing 31. Accordingly, the optical fiber terminal fixing member 22 is fixed to the housing 31. The two ferrules 2 are disposed in the two respective gaps 22e.

As described above, the fitting portions 22b of the optical fiber terminal fixing member 22 fit in the groove portions 2g of the ferrules 2, and the optical fiber terminal fixing member 22 also fits in the slit 31b. Accordingly, the optical fiber terminals 10 are firmly fixed to the housing 31, and thus, the optical connector 30 is further strengthened against vibration and impact. Therefore, the optical connector 30 can endure a tensile force of, for example, as large as 100 N, and has high connection reliability. In addition, in the third embodiment, the optical fiber terminal fixing member 22 uses the spring portion 22d to press the optical fiber terminal 10 to be stopped against the restricting surface 31g of the housing 31, and thus, the optical fiber terminal 10 is further restricted from moving toward the front end face thereof. Accordingly, the front end face 2aa of the optical fiber terminal 10 can be set in a desired position.

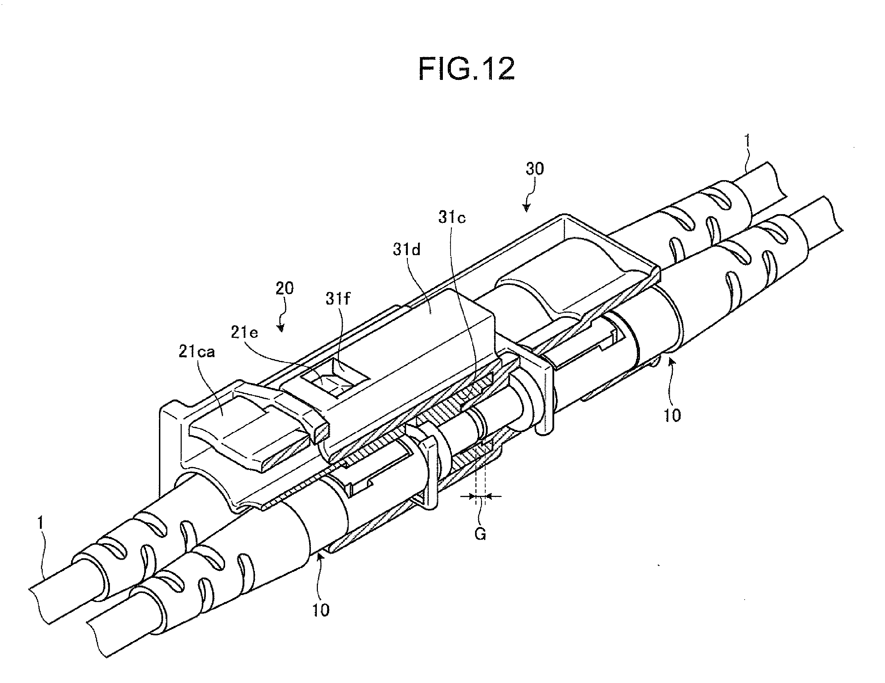

FIG. 12 is a partial cross-sectional view illustrating a state in which the optical connector 20 according to the second embodiment illustrated in FIGS. 7A to 7C is connected with the optical connector 30 according to the third embodiment illustrated in FIGS. 10A to 10C. When the optical connector 20 is to be connected with the optical connector 30, the optical connector 20 is inserted into the receptacle 31c of the optical connector 30. As a result, the arm portion 21c of the optical connector 20 is guided by the guide groove 31e, and the latch projection 21e fits into the latch hole 31f and is engaged therein. Accordingly, the optical connector 20 is connected with the optical connector 30. When the connection is to be released, the front end portion 21ca of the arm portion 21c of the optical connector 20 is pressed down, and the latch projection 21e and the latch hole 31f are disengaged from each other. Thus, the connection can be released.

When the optical connector 20 is connected with the optical connector 30, a gap G having a predetermined width is formed between the front end faces 2aa of the optical fiber terminals 10 opposed to each other. Because the gap G is formed in this manner, the front end faces 1aac of the optical fibers 1aa lying in the same planes as the corresponding front end faces 2aa of the optical fiber terminals 10 do not rub each other even if, for example, the optical fiber terminals 10 are shaken due to vibration or impact, or the optical connector 20 and the optical connector 30 are repeatedly mounted and dismounted in the production and maintenance processes or the like. Therefore, the front end face 1aac is prevented from being broken or flawed.

The width of the gap G is set to, for example, 500 µm or less, and preferably 30 µm to 300 µm, and is set so that the optical fiber cables 1 are connected to each other at a low optical loss depending on the core diameter and the numerical aperture of the optical fiber 1aa, pistoning of the optical fiber 1aa, and the like. In each of the optical connectors 20 and 30 according to the present embodiments, the optical fiber terminal 10 is ensured to be restricted from moving toward the front end thereof by the optical fiber terminal fixing member 22 and by the flange portion 2b and the restricting surface 21f or 31g of the optical fiber terminal 10, and moreover, the optical fiber terminal 10 is formed in an integral manner so that the ferrule 2 and the optical fiber 1aa are not displaced relative to each other. Thus, the gap G is maintained even when vibration or impact is applied to the optical connectors 20 and 30 connected to each other. Therefore, the front end faces 2aa of the optical fiber terminals 10 do not come in contact with each other, and thus, the front end face 1aac of the optical fiber 1aa is prevented from being broken or flawed. To prevent an optical loss caused by the gap G in the present embodiments, it is advantageous to use the optical fiber 1aa having a core diameter of 50 µm to 250 µm, particularly, 160 µm to 220 µm, and to use the optical fiber 1aa in a multi-mode communication system operating at a wavelength of 800 µm to 1300 µm.

While the above-described embodiments use the optical fiber cable that includes resin fibers as the tensile member, the optical fiber cable can use wire-like tensile member made of, for example, metal or FRP.

While the above-described embodiments use the optical fiber fixing member to fix the optical fiber to the ferrule, the optical fiber can be bonded to be fixed to the ferrule.

If dust, dirt, or water enters the optical connector according to any of the above-described embodiments when the optical connector is mounted or dismounted, an optical connection loss of the optical connector could increase. Therefore, it is preferable to provide a dust-proof or water-proof structure such as a cover made of rubber in the optical connector.

While the above-described embodiments apply the optical fiber terminal and the optical connector of the present invention to the duplex optical fiber cable, the present invention is not limited thereto but can also be applied to a simplex optical fiber cable or a multiplex optical fiber cable including three or more cables.

The present invention is not limited by the above-described embodiments. The present invention also includes structures obtained by appropriately combining the component parts described above. Further effects and variations can be easily derived by those skilled in the art. Therefore, wider aspects of the present invention are not limited to the above described embodiments, and various modifications are possible.

### Industrial Applicability

As described above, the optical fiber terminal, the optical fiber cable with the terminal, the optical connector, the optical fiber cable with the connector, and the connecting structure according to the present invention are preferably used mainly for applications in information communication in a vehicle.

### Reference Signs List

1 OPTICAL FIBER CABLE
1a OPTICAL FIBER ELEMENT WIRE
1aa OPTICAL FIBER
1aaa CORE PORTION
1aab CLADDING PORTION
1aac FRONT END FACE
1ab ELEMENT WIRE COATING PORTION
1b TENSILE MEMBER
1c OUTER COATING PORTION
2 FERRULE
2a FRONT END PORTION
2aa FRONT END FACE
2b FLANGE PORTION
2ba FRONT END FACE
2bb REAR END FACE
2c MAIN BODY
2eb CORRUGATED PORTION
2ca OPEN HOLE
2d BASE PORTION
2da PROJECTING PORTION
2e OPTICAL FIBER FIXING MEMBER
2ea GROOVE
2g GROOVE PORTION
2h, 21a, 31a INSERTION HOLE
2i SUPPORT BASE
3 CLINCHING RING
4 PROTECTION BOOT
10 OPTICAL FIBER TERMINAL
20, 30 OPTICAL CONNECTOR
21, 31 HOUSING
21b, 31b SLIT
21c ARM PORTION
21ca FRONT END PORTION
21d HOOK PORTION
21e LATCH PROJECTION
21f, 31g RESTRICTING SURFACE
22 OPTICAL FIBER TERMINAL FIXING MEMBER
22a MAIN BODY
22b FITTING PORTION
22c LATCH PORTION
22ca LATCHING PAWL
22d SPRING PORTION
22e GAP
31c RECEPTACLE
31d PROJECTION
31e GUIDE GROOVE
31f LATCH HOLE
100 IN-VEHICLE COMMUNICATION SYSTEM
101, 102 CONTROL BOARD
103, 104 OPTICAL FIBER CABLE WITH CONNECTORS
G GAP

## Claims

1. An optical fiber terminal configured to be attached to an end of an optical fiber cable,
the optical fiber cable comprising:
an optical fiber element wire having an optical fiber covered by an element wire coating;
a tensile member disposed along a longitudinal direction of the optical fiber element wire; and
a coating portion that covers the optical fiber element wire and the tensile member,
the optical fiber terminal comprising:
a ferrule that has an insertion hole for inserting and fixing the optical fiber element wire, and a front end face on which a front end face of the optical fiber inserted in the insertion hole is configured to be exposed; and
a tensile member fixing member for fixing the tensile member to the ferrule.

2. The optical fiber terminal according to claim 1, wherein
the tensile member is made of resin fibers;
the ferrule includes a base portion for placing thereon the tensile member at an opposite end to the front end face of the ferrule; and
the tensile member fixing member is a clinching member configured to be fitted into the base portion of the ferrule to clinch the base portion of the ferrule together with the tensile member placed on the base portion.

3. The optical fiber terminal according to claim 1 or 2, wherein
the ferrule includes an optical fiber fixing member having a groove for holding the optical fiber element wire, and an open hole formed on a side face of the ferrule, the open hole having a depth at which the inserted optical fiber element wire is at least exposed, and
the optical fiber fixing member is configured to be inserted into the open hole of the ferrule, and the inserted optical fiber element wire is configured to be held by the groove to fix the inserted optical fiber element wire.

4. An optical fiber cable with a terminal, comprising:
an optical fiber cable including an optical fiber element wire having an optical fiber covered by an element wire coating, a tensile member disposed along a longitudinal direction of the optical fiber element wire, and a coating portion that covers the optical fiber element wire and the tensile member; and
the optical fiber terminal according to any one of claims 1 to 3 that is attached to an end of the optical fiber cable.

5. An optical connector comprising:
the optical fiber terminal according to any one of claims 1 to 3; and
a housing that holds the optical fiber terminal,
wherein
the housing includes a fixing structure for fixing the optical connector to another optical connector in a removable manner.

6. The optical connector according to claim 5, wherein the fixing structure is a latch structure for engaging the optical connector with another optical connector.

7. The optical connector according to claim 5 or 6, further comprising an optical fiber terminal fixing member for fixing the optical fiber terminal to the housing, wherein
the ferrule includes a groove on an outer circumference of the ferrule, and the optical fiber terminal fixing member is configured to be fitted into the groove.

8. The optical connector according to claim 6 or 7, wherein the housing includes a restricting surface for restricting the optical fiber terminal from moving toward the front end face of the ferrule.

9. The optical connector according to any one of claims 6 to 8, wherein the ferrule includes a flange portion that abuts against the restricting surface of the housing to restrict the optical fiber terminal from moving toward the front end face of the ferrule.

10. An optical fiber cable with a connector, comprising:
an optical fiber cable including an optical fiber element wire having an optical fiber covered by an element wire coating, a tensile member disposed along a longitudinal direction of the optical fiber element wire, and a coating portion that covers the optical fiber element wire and the tensile member; and
the optical connector according to any one of claims 6 to 9 that is attached to an end of the optical fiber cable.

11. A connection structure of an optical connector, comprising:
at least two ferrules, into each of which an optical fiber is incorporated, the ferrules being arranged in a longitudinal direction in a manner opposed to each other, wherein
the connection structure restricts the ferrules from moving in directions coming close to each other and maintains a shortest distance between connection end faces of the at least two ferrules at 30 µm to 300 µm.
